# EUROPÄISCHE PATENTSCHRIFT

(11) **EP 2 902 713 B1**
(45) Veröffentlichungstag und Bekanntmachung des Hinweises auf die Patenterteilung: **31.05.2017**
(21) Anmeldenummer: 15450006.0
(22) Anmeldetag: 29.01.2015
(51) Int. Cl.: F24D 11/02, F25B 30/06

(54) **Wärmepumpe und Heizeinrichtung**
Heat pump and heating device
Pompe à chaleur et dispositif de chauffage

(30) Priorität: 30.01.2014 AT 692014
(43) Veröffentlichungstag der Anmeldung: 05.08.2015
(73) Patentinhaber: Golicza, Laszlo, 3361 Aschbach (AT); Bioenergy 2020+ GmbH, 8010 Graz (AT); Ortner GmbH, 3382 Loosdorf (AT); Kälte- und Systemtechnik GmbH, 3441 Judenau (AT)
(72) Erfinder: Golicza, Laszlo, 3361 Aschbach (AT)
(74) Vertreter: Beer & Partner Patentanwälte KG

(56) Entgegenhaltungen:
- EP-A1- 0 159 379
- WO-A2-2010/119318
- AT-B- 341 719
- DE-U1- 20 014 741
- DE-U1-202007 010 849

## Beschreibung

Die Erfindung betrifft eine Heizeinrichtung nach dem Oberbegriff des Anspruchs 1. Mehr als 480.00 Kachelöfen gibt es in Österreich. Jährlich kommen ca. 15.000 dazu. Auch in anderen Ländern sind Kachelöfen sehr beliebt. Einer der Gründe, warum sich Menschen für einen Kachelofen entscheiden, ist die angenehme Wärme des Kachelofens, die auf seine milde Strahlungswärme zurückzuführen ist. Wissenschaftliche Studien zeigen, dass das Kachelofenklima den Menschen deutlich besser entspannen lässt und sich positiv auf Rheumabeschwerden auswirkt.
Unter den jährlich dazukommenden Kachelöfen befinden sich auch sogenannte wasserführende Ganzhausheizungssysteme, die den Heizwärmebedarf sowie die Warmwasserbereitstellung des Gebäudes in den Wintermonaten abdecken. Für die Sommermonate und die Übergangszeit ist eine thermische Solaranlage oder ein elektrischer Warmwasserbereiter notwendig. Für manche Sommertage und teils auch in der Übergangszeit, wenn die thermische Solaranlage keinen Ertrag liefert, wird der Kachelofen benötigt, welcher zur Überhitzung der Räume führt. Um die Überhitzung in Grenzen zu halten, wird die Wärme über geöffnete Fenster oder durch eine mechanische Lüftung an die Außenluft abgeführt und somit unnötig Energie verschwendet. Auch eine Restenergie bleibt in den Speichersteinen des Ofens enthalten, die unmittelbar nicht in den Wasserpufferspeicher gebracht werden kann sondern zeitverzögert an den Raum abgegeben wird.
Die WO 2010/119318 A2 und die EP 0 159 379 A1 offenbaren einen wasserführenden Kessel, mit welchem eine Nieder-Temperatur-Wärmepumpe zur Vorwärmung eines Heizkreislaufes herangezogen wird, um dadurch eine Energieeffizienzsteigerung zu erreichen. Ein wasserführender Kessel muss mit zusätzlichen hydraulischen Sicherheitseinrichtungen betrieben werden, wobei ebenfalls eine Stromversorgung notwendig ist. Weitere Heizeinrichtungen sind aus den Veröffentlichungsschriften EP0159379A1 und der WO2010/119318A2 bekannt. Um auch in Neubauten mit einer niedrigen Energiekennzahl (Niedrigenergie- oder Passivhaus) solche Systeme verwenden zu können, ist eine Neuentwicklung des Ganzhausheizungssystems mit Kachelofen notwendig.
Der Erfindung liegt die Aufgabe zu Grunde, eine Heizeinrichtung zur Verfügung zu stellen, mit welcher die Vorteile von Öfen, insbesondere von Kachelöfen, genutzt werden können wobei die Nachteile eines Ofens in einem Ofenganzhausheizungssystem verhindert werden.
Gelöst wird diese Aufgabe erfindungsgemäß mit einer Heizeinrichtung, welche die Merkmale des Anspruches 1 aufweist. Bevorzugte und vorteilhafte Ausführungsformen der Erfindung sind Gegenstand der Unteransprüche.
Erfindungsgemäß ist vorgesehen, dass der Ofen, insbesondere eine Speicherfeuerstätte und/oder ein Hypokaustum, als Wärmequelle für die Wärmepumpe dient, dass der Ofen einen Brennraum und/oder einen Abgaszug sowie einen Lüftungskanal aufweist, wobei der Lüftungskanal zumindest um Teile des Brennraumes und/oder des Abgaszuges angeordnet ist und dass eine im Kreislauf geführte Leitung für das Wärmeträgermedium von der Wärmepumpe zum Lüftungskanal und wieder zurück zur Wärmepumpe angeordnet ist. Somit werden die Vorteile eines solchen Ofens, z.B. ein Kachelofen, wie Strahlungswärme und Unabhängigkeit von fossilen Energieträgern, genutzt, wobei gleichzeitig die bisher bekannten Nachteile eines Ofenganzhausheizungssystems, wie Überhitzung des Raumes, vermieden werden.

Im Rahmen der Erfindung ist der Ofen ein Ofen für Raum- bzw. Ganzhausheizung.

Die erfindungsgemäße Heizeinrichtung mit einer Wärmepumpe kann auch bei Häusern mit niedriger Energiekennzahl verwendet werden.

In einer besonders bevorzugten Ausführungsform ist vorgesehen, dass Energie der Abwärme, insbesondere Verbrennungswärme und/oder Abgaswärme, des Ofens als Wärmequelle für den Kreisprozess der Wärmepumpe dient.

Alternativ oder zusätzlich dazu kann vorgesehen sein, dass das Wärmeträgermedium ein Fluid, insbesondere Luft oder Wasser oder ein Gemisch auf Wasserbasis, ist. Im Rahmen der Erfindung ist die Verwendung von Luft bevorzugt. Im Gegensatz zur Verwendung von Wasser treten die vorteilhaften Effekte auf, dass ein stromloser Betrieb ohne besondere Sicherheitseinrichtungen möglich ist und dass alle hydraulischen Komponenten außerhalb des Ofens angeordnet sind, wobei die Wartung erheblich erleichtert wird.

Im Rahmen der Erfindung kann eine in einem Kreislauf geführte Leitung für das Wärmeträgermedium von der Wärmepumpe zum Ofen und wieder zurück zur Wärmepumpe angeordnet sein. Insbesondere kann die im Kreislauf geführte Leitung für das Wärmeträgermedium von einem Wärmetauscher der Wärmepumpe, insbesondere von einem im Niederdruckbereich angeordnetem Wärmetauscher, zum Ofen und wieder zurück zur Wärmepumpe angeordnet sein.

Im Rahmen der Erfindung kann die Wärmepumpe eine Luft-Wasser-Wärmepumpe oder eine Luft-Luft-Wärmepumpe sein, wobei eine Luft-Wasser-Wärmepumpe bevorzugt ist. Das Kältemittel kann R134a sein.

Erfindungsgemäß kann ein Verfahren zum Betreiben einer Heizeinrichtung nach Anspruch 1 vorgesehen sein. Die zur Heinzeinrichtung beschriebenen Merkmale können dann auch als Verfahrensmerkmale umgesetzt werden.

Weitere, Einzelheiten, Merkmale und Vorteile der Erfindung ergeben sich aus der nachstehenden Beschreibung unter Bezugnahme auf die angeschlossene Zeichnung, in welcher eine bevorzugte Ausführungsform dargestellt ist.

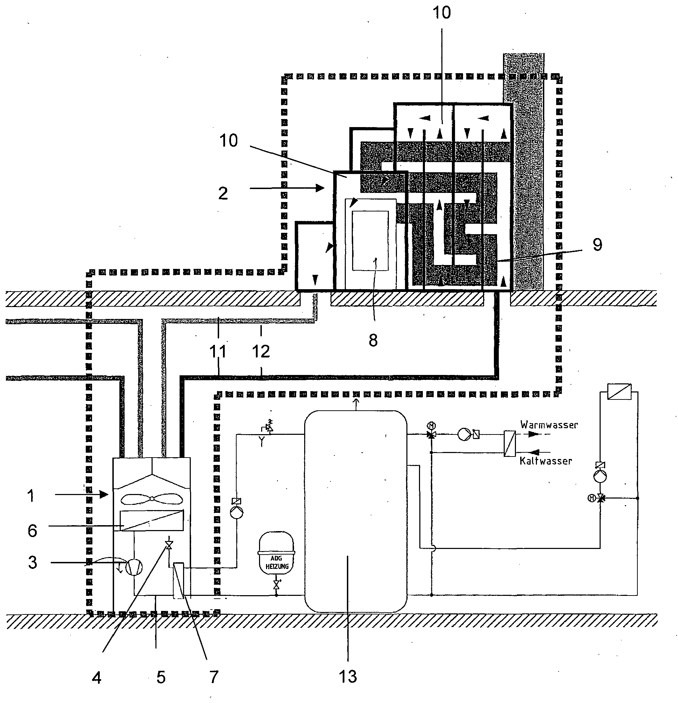

In der Zeichnung ist eine erfindungsgemäße Heizeinrichtung mit einer Wärmepumpe 1 und einem Ofen 2 als Wärmequelle dargestellt. Die Wärmepumpe 1 ist in diesem Ausführungsbeispiel eine Luft-Wasser-Wärmepumpe. Der Ofen 2 ist in diesem Ausführungsbeispiel ein Kachelofen.

Die Wärmepumpe 1 weist einen Verdichter 3 und eine Drossel 4 auf, welche einen Kreislauf 5 eines Kältemittels in einen Niederdruckbereich und einen Hochdruckbereich einteilen. Im Niederdruckbereich ist ein erster Wärmetauscher 6, insbesondere ein Verdampfer, und im Hochdruckbereich ist ein zweiter Wärmetauscher 7, insbesondere ein Kondensator, angeordnet. Das Kältemittel strömt im Kreislauf 5 entlang der in der Figur angezeigten Pfeilrichtung.

Der Ofen 2 weist einen Brennraum 8 sowie einen Abgaszug 9 auf, um welche ein Lüftungskanal 10 angeordnet ist. Im Lüftungskanal 10 strömt entlang der in der Figur angezeigten Pfeilrichtung Luft. Die Luft dient als Wärmeträgermedium und ist in einem Kreislauf 11 geführt, in welchem sie Energie der Abwärme, insbesondere Verbrennungswärme und/oder Abgaswärme, des als Wärmequelle dienenden Ofens 2 aufnimmt und so aufgenommene Energie an die wärmepumpe 1 abgibt. Hierzu ist eine im Kreislauf 11 geführte Leitung 12 für das Wärmeträgermedium vorgesehen, die vom ersten, im Niederdruckbereich angeordneten Wärmetauscher 6 der Wärmepumpe 1 zum Lüftungskanal 10 des Ofen 2 und wieder zurück zum ersten Wärmetauscher 6 der Wärmepumpe 1 führt.

Die Anordnung derjenigen Teile des Kreislaufs 11 für das Wärmeträgermedium, welche dem Brennraum 8 und/oder dem wenigstens einen Abgaszug 9 des Ofens 2 zugeordnet sind, (d.h. der Lüftungskanal 11 im Falle von Luft als Wärmeträgermedium oder wenigstens ein Wärmetauscher im Falle von Wasser als Wärmeträgermedium) sind derart ausgestaltet, dass eine Taupunktunterschreitung des Abgases des Ofens 2 und eine damit verbundene Kondensatbildung vermieden wird. Gleichzeitig ermöglichen diese Teile des Kreislaufs 11 für das Wärmeträgermedium eine bestmögliche Wechselrate für das Wärmeträgermedium, wobei möglichst wenig störende Strömungsgeräusche in der Ofenhülle entstehen. Unter Wechselrate wird im Rahmen der Erfindung insbesondere der Volumenstrom und/oder der Volumenaustausch und/oder die Umwälzungsrate des Wärmeträgermediums verstanden.
Die Wärmepumpe überträgt Wärme an ein Speichermedium. Das Speichermedium ist in der gezeigten Ausführungsform Wasser und ist in einem Pufferspeicher 13 beinhaltet. Für die Wärmepumpe 1 kann beispielsweise eine wasserseitige Nennheizleistung von 5 kW angestrebt werden, welche für moderne Bauten ausreichend ist. Die erfindungsgemäße Heizeinrichtung ist für den Winterbetrieb so entwickelt, dass die Wärmepumpe 1 aus der warmen Kachelofenhülle oder die Energie aus dem Wärmeträgermedium (z.B. Umluft) entnimmt und diese über die Wärmepumpe 1 an den Heizkreis angibt. Für die Übergangszeit und den Sommerbetrieb ist eine automatische Umschaltung zwischen vom Ofen 2 kommenden Wärmeträgermedium und Außenluft über eine Regelungseinrichtung möglich, so dass die Wärmepumpe 1 auch die Außenluft als Wärmequelle nutzen kann, um bei optimalen Außenluftbedingungen die Warmwasserbereitung zu realisieren. Selbstverständlich kann zu einem späteren Zeitpunkt auch wieder auf vom Ofen 2 kommendes Wärmeträgermedium umgeschaltet werden. Zum Umschalten kann eine luftseitige Umschaltbox vorgesehen sein. Weiters kann beim Sommerbetrieb eine Kühlung der Räume über der Ofenhülle erfolgen.

In Abhängigkeit von der Masse der installierten Speichersteine des Ofens kann im Rahmen der Erfindung grundsätzlich noch eine Restenergiemenge von bis zu 20 % gegenüber gängigen Ganzhausheizungssystemen genützt werden, da eine Wärmepumpe 1 niedrigere Quellentemperaturen (z.B. 20°C) auf höhere Heizkreistemperaturen (z.B. 35°C) heben kann und somit die Ofenspeichertemperatur bis auf Raumtemperatur herunter setzen kann.

Gängige Luft-Wasser-Wärmepumpen sind aus material- und kältemitteltechnischen Gründen für Quellentemperaturen unter 35°C bestimmt. Bei einer Erhöhung der Lufttemperatur schalten sich diese Wärmepumpen aus Sicherheitsgründen automatisch aus. Diese Sicherheitsschaltung ist zwingend vorgesehen, d.h. gängige Wärmepumpen können nicht bei Quellentemperaturen arbeiten, die weit höher als 35°C liegen. Auch können gängige Wärmepumpen, selbst wenn sie bei einer Quellentemperatur von ungefähr 35°C nicht ausschalten würden, bei deutlich höheren Quellentemperaturen nicht arbeiten, da der Kältemittelkreislauf der Wärmepumpe dann nicht funktionieren würde.

Die Wärmepumpe 1 kann -unabhängig von der in der Figur dargestellten, konkreten Ausführungsform - im Gegensatz dazu in einem breiten Temperaturarbeitsbereich und bei hohen Quellentemperaturen, beispielsweise ab 5 - 10 °C, insbesondere 8°C, bis 70 - 80°C, insbesondere 75°C, arbeiten. Hierzu ist die erfindungsgemäße Wärmepumpe besonders auf diesen Arbeitsbereich ausgelegt, d.h. das Kältemittel, der Kältemitteldruck, das Expansionsventil (Drossel), der Verdampfer, der Kondensator und der Verdichter sind auf diese Arbeitsbereiche besonders angepasst. Im Gegensatz zu gängigen Wärmepumpen kann der im Niederdruckbereich angeordnete Wärmetauscher 6 ein Verdampfer sein, der beispielsweise für einen hohen Arbeitsdruck des Kältemittels bis ca. 5 - 6 bar, insbesondere 5,5 bar, ausgelegt ist. Der Verdichter 3 kann im Gegensatz zu gängigen Wärmepumpen ein beispielsweise einstufiger Hubkolbenverdichter mit sehr großem Einsatzbereich sein. Im Gegensatz zu gängigen Wärmepumpen kann zudem der im Hochdruckbereich angeordnete Wärmetauscher 7 beispielsweise ein großdimensionierter Kupfer/Alu Verdampfer mit insbesondere leisem Radialgebläse sein.

Eine mögliche Taupunktunterschreitung der Ofenshülle, kann - beispielsweise wenn während des Sommerbetriebs über die Ofenhülle gekühlt wird - überwacht bzw. gemessen werden, wobei abhängig vom Ergebnis dieser Überwachung bzw. Messung das Betreiben der erfindungsgemäßen Wärmepumpe 1 geregelt wird. Vorzugsweise werden ebenso physikalische Größen des Wärmeträgermediums überwacht bzw. gemessen, wobei die Ergebnisse hiervon als Eingangsgröße für die Regelung verwendet werden können.

Zusammenfassend kann ein Ausführungsbeispiel der Erfindung wie folgt dargestellt werden:

Eine Heizeinrichtung hat eine Wärmepumpe 1 und einen Ofen 2, insbesondere eine Speicherfeuerstätte und/oder ein Hypokaustum, wobei die Wärmepumpe einen Verdichter 3 und eine Drossel 4, welche einen Kreislauf 5 eines Kältemittels in einen Niederdruckbereich und einen Hochdruckbereich einteilen, und wenigstens einen Wärmetauscher 6, 7 aufweist. Ein Wärmeträgermedium ist in einem Kreislauf 11, in welchem eine Wärmequelle angeordnet ist, geführt. Der Ofen 2, insbesondere eine Speicherfeuerstätte und/oder ein Hypokaustum dient als Wärmequelle für die wärmepumpe 1 dient und weist einen Brennraum 8 und/oder einen Abgaszug 9 sowie einen Lüftungskanal 10 auf, wobei der Lüftungskanal 10 zumindest um Teile des Brennraumes 8 und/oder des Abgaszuges 9 angeordnet ist. Eine im Kreislauf 11 geführte Leitung 12 für das Wärmeträgermedium ist von der Wärmepumpe 1 zum Lüftungskanal 10 und wieder zurück zur Wärmepumpe 1 angeordnet.

Die gewohnte Strahlungswärme eines Kachelofens wird erhalten. Es findet eine kontinuierliche Energieabfuhr aus der Kachelofenhülle statt, wodurch keine Überhitzung der Räume entsteht. Die erfindungsgemäße Heizeinrichtung kann so geregelt werden, dass die Oberflächentemperatur des Ofens 2 eingestellt werden kann. Es ist ein stromloser Betrieb des Ofens 2 für die Raumwärme möglich.

Mit der erfindungsgemäßen Heizeinrichtung können gegenüber gängigen Ganzhausheizungssystemen größere Wassermengen bei geringeren Energiekosten erwärmt werden.

Mit der erfindungsgemäßen erfindungsgemäßen Heizeinrichtung können sowohl während des Winter- als auch während des Sommer- und Übergangsbetriebes durchgängig höhere Leistungs- und Arbeitszahlen erreicht werden als bei gängigen Wärmepumpen, die mit Quellentemperaturen bis maximal 35°C arbeiten.

## Patentansprüche

1. Heizeinrichtung mit einer Wärmepumpe (1) und einem Ofen (2), insbesondere eine Speicherfeuerstätte und/oder ein Hypokaustum, wobei die Wärmepumpe einen Verdichter (3) und eine Drossel (4), welche einen Kreislauf (5) eines Kältemittels in einen Niederdruckbereich und einen Hochdruckbereich einteilen, und wenigstens einen Wärmetauscher (6, 7) aufweist, wobei ein Wärmeträgermedium in einem Kreislauf (11), in welchem eine Wärmequelle angeordnet ist, geführt ist, **dadurch gekennzeichnet, dass** der Ofen (2) als Wärmequelle für die Wärmepumpe (1) dient, dass der Ofen (2) einen Brennraum (8) und/oder einen Abgaszug (9) sowie einen Lüftungskanal (10) aufweist, wobei der Lüftungskanal (10) zumindest um Teile des Brennraumes (8) und/oder des Abgaszuges (9) angeordnet ist und dass eine im Kreislauf (11) geführte Leitung (12) für das Wärmeträgermedium von der Wärmepumpe (1) zum Lüftungskanal (10) und wieder zurück zur Wärmepumpe (1) angeordnet ist.

2. Heizeinrichtung nach Anspruch 1, **dadurch gekennzeichnet, dass** Energie der Abwärme, insbesondere Verbrennungswärme und/oder Abgaswärme, des Ofens (2) als Wärmequelle dient.

3. Heizeinrichtung nach Anspruch 1 oder 2, **dadurch gekennzeichnet, dass** das Wärmeträgermedium ein Fluid, insbesondere Luft oder Wasser oder ein Gemisch auf Wasserbasis, ist.

4. Heizeinrichtung nach einem der Ansprüche 1 bis 3, **dadurch gekennzeichnet, dass** die im Kreislauf (11) geführte Leitung (12) für das Wärmeträgermedium von einem Wärmetauscher (6, 7) der Wärmepumpe (1), insbesondere von einem im Niederdruckbereich angeordnetem Wärmetauscher (6), zum Ofen (2) und wieder zurück zur Wärmepumpe (1) angeordnet ist.

5. Heizeinrichtung nach einem der Ansprüche 1 bis 4, **dadurch gekennzeichnet, dass** sie eine Umschaltbox aufweist, mit der zwischen einer Außenluft-Leitung und der im Kreislauf (11) geführten Leitung (12) umgeschaltet werden kann.

6. Heizeinrichtung nach den Ansprüchen 1 bis 5, **dadurch gekennzeichnet, dass** die Wärmepumpe einen Temperaturarbeitsbereich bei Quellentemperaturen ab 5 - 10 °C, insbesondere 8 °C, bis 70 - 80 °C, insbesondere 75 °C, hat.

7. Heizeinrichtung nach einem der Ansprüche 1 bis 6, **dadurch gekennzeichnet, dass** im Sommerbetrieb über die Ofenhülle gekühlt werden kann.

8. Heizeinrichtung nach Anspruch 7, **dadurch gekennzeichnet, dass** im Sommerbetrieb bei nicht beheiztem Ofen (2), über die Ofenhülle gekühlt werden kann, wobei der nicht beheizte Ofen (2) bei Raumtemperatur als Quellentemperatur, als Wärmequelle für die Wärmepumpe (1) dient, wobei die Wärme des Ofens (2) über das in der im Kreislauf (11) geführten Leitung (12) befindliche Wärmeträgermedium an die Wärmepumpe (1) übertragbar ist, wobei die Wärme über die Wärmepumpe (1) an ein Speichermedium übertragbar ist, wodurch die Temperatur des Wärmeträgermediums auf einen Wert unterhalb der Quellentemperatur sinkt, und wobei die gegenüber der Quellentemperatur niedrigere Wärme über das in der im Kreislauf (11) geführten Leitung (12) befindliche Wärmeträgermedium an den Ofen (2) übertragbar ist.

## Claims

1. Heating device with a heat pump (1) and a furnace (2), in particular a storage furnace and/or a hypocaust, wherein the heat pump comprises a compressor (3) and choke (4), which divide a circuit (5) of a refrigerant into a low pressure region and a high pressure region, and at least one heat exchanger (6, 7), wherein a heat exchange medium is conveyed in a circuit (11) in which a heat source is arranged, **characterised in that** the furnace (2) is used as a heat source for the heat pump, and the furnace (2) comprises a combustion chamber (8) and/or a waste gas flue (9) as well as a ventilation channel (10), wherein the ventilation channel (10) is arranged at the least around parts of the combustion chamber (8) and/or of the waste gas flue (9) and that a line (12) routed in the circuit (11) for the heat transfer medium is arranged from the heat pump (1) to the ventilation channel (10) and back again to the heat pump (1).

2. Heating device according to claim 1, **characterised in that** energy from the waste heat, in particular heat of combustion and/or waste gas heat, of the furnace (2) is used as a heat source.

3. Heating device according to claim 1 or 2, **characterised in that** the heat transfer medium is a fluid, in particular air or water or a mixture on a water base.

4. Heating device according to any one of claims 1 to 3, **characterised in that** the line (12) routed in the circuit (11) for the heat transfer medium is arranged from a heat exchanger (6, 7) of the heat pump (1), in particular from a heat exchanger (6) arranged in the low pressure region, to the furnace (2) and back again to the heat pump (1).

5. Heating device according to any one of claims 1 to 4, **characterised in that** it comprises a switch box, with which switching can take place between an external air line and the line (12) routed in the circuit (11).

6. Heating device according to any one of claims 1 to 5, **characterised in that** the heat pump has a temperature working range at source temperatures from 5 - 10°C, in particular 8°C, up to 70 - 80°C, in particular 75°C.

7. Heating device according to any one of claims 1 to 6, **characterised in that**, in the summer operation, cooling can take place via the furnace shell.

8. Heating device according to claim 7, **characterised in that**, in the summer operation with an unheated furnace (2), cooling can take place via the furnace shell, wherein the unheated furnace (2) at room temperature is used as a source temperature, as a heat source for the heat pump (1), wherein the heat of the furnace (2) can be transferred to the heat pump (1) by the heat transfer medium present in the line (12) routed in the circuit (11), wherein the heat can be transferred via the heat pump (1) to a storage medium, as result of which the temperature of the heat transfer medium falls to a value below the source temperature, and wherein the heat lower than the source temperature can be transferred to the furnace (2) by the heat transfer medium present in the line (12) routed in the circuit (11).

## Revendications

1. Dispositif de chauffage avec une pompe à chaleur (1) et un poêle (2), notamment un foyer à accumulation et/ou hypocauste, la pompe à chaleur comportant un compresseur (3) et un élément d'étranglement (4), qui divisent un circuit (5) d'un frigorigène en une zone de basse pression et une zone de haute pression, et au moins un échangeur de chaleur (6,7), un milieu caloporteur étant guidé dans un circuit (11) dans lequel est disposée une source de chaleur, **caractérisé en ce que** le poêle (2) sert de source de chaleur pour la pompe à chaleur (1), **en ce que** le poêle (2) comporte une chambre de combustion (8) et/ou un carneau d'évacuation des gaz brûlés (9) ainsi qu'un conduit d'aération (10), le conduit d'aération (10) étant disposé au moins autour des parties de la chambre de combustion (8) et/ou du carneau d'évacuation des gaz brûlés (9) et **en ce qu'**une conduite (12) guidée dans le circuit (11) pour le milieu caloporteur est disposée depuis la pompe à chaleur (1) vers le conduit d'aération (10) et à nouveau vers la pompe à chaleur (1) en retour.

2. Dispositif de chauffage selon la revendication 1, **caractérisé en ce que** l'énergie de la chaleur dissipée du poêle (2), notamment la chaleur de combustion et/ou la chaleur des gaz brûlés, sert de source de chaleur.

3. Dispositif de chauffage selon la revendication 1 ou 2, **caractérisé en ce que** le milieu caloporteur est un fluide, notamment de l'air ou de l'eau ou un mélange à base aqueuse.

4. Dispositif de chauffage selon l'une quelconque des revendications 1 à 3, **caractérisé en ce que** la conduite (12) guidée dans le circuit (11) pour le milieu caloporteur est disposée allant d'un échangeur de chaleur (6,7) de la pompe à chaleur (1), notamment d'un échangeur de chaleur (6) disposé dans la zone de basse pression, vers le poêle (2) et à nouveau vers la pompe à chaleur (1) en retour.

5. Dispositif de chauffage selon l'une quelconque des revendications 1 à 4, **caractérisé en ce qu'**il comporte un boîtier de commutation avec lequel on peut commuter entre une conduite d'air extérieur et la conduite (12) guidée dans le circuit (11).

6. Dispositif de chauffage selon l'une quelconque des revendications 1 à 5, **caractérisé en ce que** la pompe à chaleur dispose d'une gamme de températures de fonctionnement à des températures sources allant de 5 - 10°C, en particulier 8°C, à 70 - 80°C, en particulier 75°C.

7. Dispositif de chauffage selon l'une quelconque des revendications 1 à 6, **caractérisé en ce qu'**en fonctionnement été, il est possible de refroidir par le biais de l'enveloppe du poêle.

8. Dispositif de chauffage selon la revendication 7, **caractérisé en ce qu'**en fonctionnement été, avec le poêle (2) non chauffé, il est possible de refroidir par le biais de l'enveloppe du poêle, le poêle (2) non chauffé, à température ambiante en tant que température source, sert de source de chaleur pour la pompe à chaleur (1), la chaleur du poêle (2) pouvant être transmise à la pompe à chaleur (1) par le biais du milieu caloporteur se trouvant dans la conduite (12) guidée dans le circuit (11),la chaleur pouvant être transmise à un milieu d'accumulation par le biais de la pompe à chaleur (1), la température du milieu caloporteur étant abaissée de ce fait à une valeur inférieure à la température source et la chaleur plus basse par rapport à la température source pouvant être transmise au poêle (2) par le biais du milieu caloporteur se trouvant dans la conduite (12) guidée dans le circuit (11).
